# EUROPEAN PATENT SPECIFICATION

(11) **EP 2 397 002 B1**
(45) Date of publication and mention of the grant of the patent: **13.02.2013**
(21) Application number: 09788490.2
(22) Date of filing: 16.02.2009
(51) Int. Cl.: H04W 52/02

(54) **CONTROLLING CELL ACTIVATION IN A RADIO COMMUNICATION NETWORK**
STEUERUNG DER ZELLENAKTIVIERUNG IN EINEM FUNKKOMMUNIKATIONSNETZ
CONTRÔLE D'ACTIVATION DE CELLULE DANS UN RÉSEAU DE RADIOCOMMUNICATION

(43) Date of publication of application: 21.12.2011
(73) Proprietor: Telefonaktiebolaget LM Ericsson (publ), 164 83 Stockholm (SE)
(72) Inventor: ÖSTERLING, Jacob, S-175 60 Järfälla (SE)
(74) Representative: Kühn, Friedrich Heinrich
(86) International application number: PCT/SE2009/050161
(87) International publication number: WO 2010/093298

(56) References cited:
- WO-A-02/07464
- DE-A1-102005 051 291
- GB-A- 2 316 578
- US-A1- 2007 058 588
- "A method for interference control and power saving for home access point" IP.COM JOURNAL, IP.COM INC., WEST HENRIETTA, NY, US, 13 December 2007 (2007-12-13), XP013122942 ISSN: 1533-0001
- MITSUBISHI ELECTRIC: "Dynamic Setup of HNBs for Energy Savings and Interference Reduction" 3GPP DRAFT; R3-081949 (DYNAMIC SETUP HNBS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050165010 [retrieved on 2008-08-13]
- SUJUAN FENG ET AL: "Self-Organizing Networks (SON) in 3GPP Long Term Evolution" INTERNET CITATION, 20 May 2008 (2008-05-20), pages 1-15, XP002526917 [retrieved on 2009-05-05]

## Description

### TECHNICAL FIELD

The present invention generally relates to radio communications technology and operations in a radio communication network. and in particular to he issue of controlling cell activation in such a radio communication network.

### BACKGROUND

Today, radio communication networks typically comprise radio base stations with associated cells thai are continuously active. This means that the radio base stations more or less continuously transmit certain forms of signals in the cells to assist user equipment present in the radio communication network or user equipment attempting to connect thereto. Examples of such signals are reference signals, often denoted pilot signals, synchronization signals. and the broadcast channel. These signals are used for many purposes including downlink (DL) channel estimation, cell synchronization in connection with power-up of user equipment and mobility cell search.

In Wideband Code Division Multiple Access (WCDMA) a NodeB for a cell can be put to sleep at night by switching off the power supply to the NodeB in order to reduce power consumption. In the morning, the NodeB is turned on again by once more providing power supply to the NodeB.

The artide *A method for inteference control and power saving for home access point°, in IP.COM Journal, December 2007 relates to interference control and power saving for Home Access Points (HAP), also referred to as Customer Premise Equipment (CPE). In particular, it is assumed that the UE is associated with a femto access point and has overlay macro coverage inside or just outside home. When the femto and overlay macro belong to the same paging area, the following solution is proposed for turning on the femto CPE. When the UE enters paging area of macro/femto due to handover from any BTS to a macro BTS in UE's home paging area, the network identifies that the UE has entered the paging area of UE's home access point and sends a power on message to the femto CPE.

The 3GPP draft "Dynamic Setup of HNBs for Energy Savings and Interference Reduction', R3-081949, August 2008 relates to different scenarios or events for triggering activation of a femto base station, also referred to as a Home Node B (HNB). For example, activation can be triggered when the mobile runs a Tracking Area Update (TAU) procedure in a Tracking Area (TA) known to be in the vicinity of the femto base station. Another scenario is to activate the femto base station when the mobile enters a cell (e.g. a macro cell) known to be in the vicinity of the femto base station. Yet another scenario involves activation when the mobile enters a zone tailored to the femto base station, where it is assumed that the mobile can be located with a granularity that is not directly linked to cell boundaries. For example, the network can get the mobile position through triangulation from measurements on signals from several neighbouring cells, and the triggering zone may then be defined by the geographical coordinates. Other scenarios of D2 include the femto base station detecting a specific signal transmitted by the mobile, or the mobile detecting the femto base station. In particular, one of the scenarios requires assignment of different specific signals to the UE such that the femto Node B can distinguish one UE from another, and only wake up when the UE associated with the femto Node B enters the femto cell.

### SUMMARY

It is a general object to provide reductions in power consumption in a radio communication networks while still ensuring efficient communication services.

It is a specific object to provide a method of controlling activation of at least one cell in a radio communication network.

It is another specific object to provide an apparatus for controlling activation of at least one cell in a radio communication network.

Yet another object is to provide a network unit comprising such an apparatus for controlling activation of at least one cell in a radio communication network

These and other objects are met by embodiments as defined by the accompanying patent claims.

The possibility of temporarily inactivating cells into passive cells, where their associated radio base stations do not transmit any of the above-mentioned signals is sometimes advantageous. Such a cell inactivation could then be used for example during periods in which there is no need, or at least very low need for radio communication services in the cells. Inactivating cells and turning off the transmitters of the passive cells not only saves power for the radio base stations but also contributes to lowering the total interference level in the radio communication network.

The inventor has recognized that the inactivation of cells during periods of no or low need for radio communication services not only achieves several advantages for the operators of the radio communication networks but also brings about new challenges. For instance, today there is no efficient solution of how to activate a passive cell when a potential need for radio communication services arises in the area of the passive cell. Furthermore, there is no efficient solution to inform user equipment of the existence of passive cells in the radio communication network.

In the context of a radio communication network having a number of radio base stations, at least one of which is a serving radio base station managing an active cell, a basic idea is to request signal strength measurements in an area of at least one passive other cell of a radio base station currently not transmitting any cell-defining information for the passive cell. Based on received information representative of the requested signal strength measurements, at least one passive cell is selected for activation, and the selected cell is then requested to be activated by causing the corresponding radio base station managing the selected cell to start transmission of cell-defining information.

In this way the invention allows cells to stay passive for as long as possible to reduce power consumption, and allows passive cells to be activated when needed to ensure satisfactory communication services for the users.

Other advantages offered by the invention will be appreciated when reading the below description of embodiments of the invention.

### BRIEF DESCRIPTION OF THE DRAWINGS

The invention, together with further objects and advantages thereof, will be best understood by reference to the following description taken together with the accompanying drawings, in which:
Fig. 1 is a flow diagram illustrating a method of controlled cell activation according to an exemplary embodiment.
Fig. 2 is a flow diagram illustrating a method of controlled cell activation according to another exemplary embodiment.
Fig. 3 is a flow diagram illustrating a method of controlled cell activation according to yet another exemplary embodiment.
Fig. 4 is an overview of a radio communication system according to an exemplary embodiment.
Fig. 5 is an overview of a radio communication system according to another exemplary embodiment.
Fig. 6 is an overview of a radio communication system according to yet another exemplary embodiment.
Fig. 7 is an overview of a radio communication system according to a further exemplary embodiment.
Fig. 8 is a schematic diagram illustrating co-siting of radio base stations of different radio access networks (RANs) and/or different radio access technologies (RATs) according to an exemplary embodiment.
Fig. 9 is a schematic diagram illustrating an example of a common cell plan between different radio access networks (RANs) and/or different radio access technologies (RATs).
Fig. 10A is a schematic diagram illustrating an example of a cell plan in which radio base stations of different radio access networks (RANs) and/or different radio access technologies (RATs) are not co-sited.
Fig. 10B is a schematic diagram illustrating an example of a partially common cell plan according to an exemplary embodiment.
Fig.11A is a schematic diagram illustrating a simple example of a cell plan for a given radio access network/technology.
Fig. 11B is a schematic diagram illustrating an example of a cell plan for a given radio access network/technology extended with a number of micro cells.
Fig.12 is a schematic diagram illustrating an example of a measurement report according to an exemplary embodiment.
Fig. 13 is a schematic block diagram of a cell activation controller or apparatus for controlling cell activation according to an exemplary embodiment.

### DETAILED DESCRIPTION

Throughout the drawings, the same reference characters will be used for corresponding or similar elements.

Embodiments as disclosed herein relate to controlling cell activation in a radio communication network having at least one passive cell.

In current cellular radio communication networks, the radio base stations continuously transmit certain forms of signals in their respective cells. Examples of such signals are pilot signals, such as reference and/or synchronization signals, and the broadcast channel. These signals are used for many purposes, including:
Mobility cell search: User equipment regularly scans for neighboring cells. The synchronization signals transmitted in a neighboring cell are used to find and synchronize to a potential neighbor. Active user equipment typically reports the signal strength of the neighboring cell to the network, which takes a decision if the user equipment should be handed over to the candidate cell.

Initial cell search: At power-up user equipment tries to find potential cells to connect to by scanning for synchronization signals. Once a cell is found and synchronization is obtained, the user equipment reads the broadcast channel and pilot signal(s) transmitted in the cell to obtain the necessary system information and normally performs a random access to connect to the network.

Data reception: Active user equipment needs to perform channel estimation, typically based on the pilot reference signals, to receive the transmitted data. The pilot reference signals may also be used for estimation and reporting of the downlink channel quality to support radio base station functions such as channel-dependent scheduling.

User equipment synchronization: Idle user equipment needs synchronization signals and/or reference signals to be able to keep in sync with the network, i.e. once waking up from paging DRX (Discontinuous Reception) cycles, these signals are used to fine-tune timing and frequency errors etc.

When there are active users in a cell, the cost of transmitting the signals discussed above is justified. However, when there are no active users in the cell, there is in principle no need for these signals. This is especially true in scenarios with dense deployment of cells, i.e. in case where micro cells are placed under macro cells. In such scenarios, the micro cells are primarily used to cope with high load scenarios, and the energy spent on transmitting these signals from the micro cells in low load scenarios is in essence wasted.

In absence of active user equipment in a cell, or at least very low number of active user equipment, there is in principle no need to transmit anything. This allows the radio base station to turn off the power amplifier, the baseband processing as well as the transmission equipment. The cell managed by the radio base station in essence becomes "idle" in the downlink. Such a cell is denoted a passive cell herein, although alternative terminology could also be used, such as sleeping cell or inactivated cell. The expression "passive cell" therefore also encompasses expressions such as idle, sleeping or inactivated cell.

As defined herein, a passive cell is a cell of the radio communication network for which the corresponding radio base station is currently not transmitting any cell-defining information for the cell. The cell-defining information includes, in particular, information to assist user equipment in finding the cell. It may also include information required by user equipment for identifying and actually locking to a cell. Cell-defining information typically comprises the information traditionally carried by the above-mentioned pilot signals, such as reference signals and/or synchronization signals, and optionally also information carried by the broadcast channel. In a particular exemplary embodiment, the cell-defining information includes at least synchronization signal information.

Note, however, that even though the radio base station does not transmit any cell-defining information for a passive, the radio base station may optionally still have its receivers switched on and can therefore receive data transmitted, for instance, by user equipment even though the transmitter or transmitters for the passive cell are switched off.

For the purposes of the present disclosure, a radio base station is assumed to serve one or more cells in the radio communication network. Thus, "radio base station" also refers to more recent entities, such as NodeB and eNodeB (evolved NodeB), which are capable of handling more than one cell, and other corresponding network nodes, such as base transceiver station (BTS) and base station (BS). Furthermore, the expression base station may also encompass wireless network nodes such as relays and repeaters and home base stations having a respective geographical serving area, i.e. a cell.

Similarly, "user equipment" will be used to indicate different types of radio terminals, such as mobile stations, mobile user equipments, laptops, etc. having functionality for wirelessly communicating with radio base stations in the radio communication network.

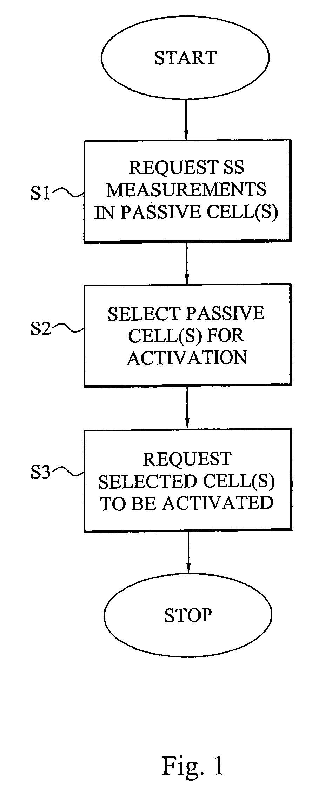

Fig. 1 is a flow diagram illustrating a method of controlling activation of at least one cell in a radio communication network. The radio communication network comprises at least one active cell, i.e. having an associated radio base station that transmits cell-defining information for the active cell, and at least one passive cell, i.e. having an associated radio base station that currently does not transmit any cell-defining information for the passive cell.

In the example of Fig. 1, the method starts in step S1 by requesting signal strength measurements in an area of at least one passive other cell of a radio base station currently not transmitting any cell-defining information for the passive cell. Based on received information representative of the requested signal strength measurements, at least one passive cell is selected for activation in step S2. The selected cell is then requested to be activated in step S3 by causing the corresponding radio base station managing the selected cell to start transmission of cell-defining information to assist user equipment in finding the cell.

In this way the invention allows cells to stay passive for as long as possible to reduce power consumption, and allows passive cells to be activated when needed to ensure satisfactory communication services for the users.

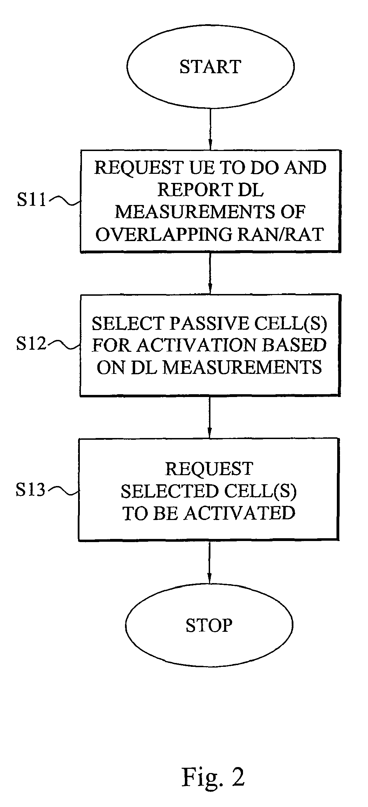

Fig. 2 is a flow diagram illustrating a method of controlled cell activation according to another exemplary embodiment. In this example, the user equipment in step S11 is requested to perform and report downlink measurements of received cell-defining information from at least one radio base station of another overlapping radio access network (RAN). In step S12 at least one passive other cell is selected for activation based on reported downlink measurements of the overlapping radio access network. The selected cell is then requested to be activated in step S13 by causing the corresponding radio base station managing the selected cell to start transmission of the required cell-defining information.

In an exemplary embodiment, the active cell and the passive other cell(s) of which at least one cell is to be activated are associated with a first radio access technology, and the overlapping radio access network is associated with a second different radio access technology. By way of example, the first radio access technology may be Long Term Evolution (LTE), and the second radio access technology may be one of GSM, CDMA2000, TDSCDMA and WCDMA.

It is however also possible that the overlapping radio access network is of the same underlying radio access technology. By way of example, a first radio access network may be based on a given radio access technology operating at a first frequency and the second overlapping radio access network may based on the same radio access technology but operating at a second different frequency. Examples of different networks of the same underlying technology operating at different frequency ranges include LTE 700 MHz and LTE 2600 Hz.

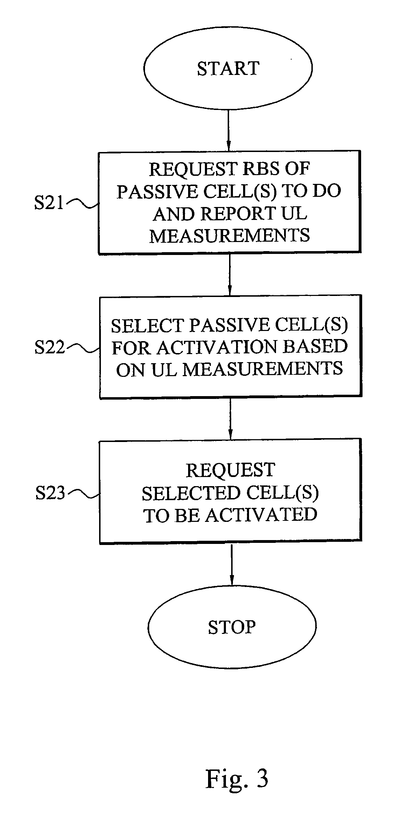

Fig. 3 is a flow diagram illustrating a method of controlled cell activation according to yet another exemplary embodiment. In this example, one or more radio base stations managing a respective passive other cell is/are requested in step S21 to perform and report uplink measurements of user equipment transmissions. In step S22 at least one passive other cell is selected for activation based on reported uplink measurements of user equipment transmissions. The selected cell is then requested to be activated in step S23 by causing the corresponding radio base station managing the selected cell to start transmission of the required cell-defining information.

As will be explained in more detail later on, if desired, it is possible to use also reported downlink measurements by the user equipment of transmissions in one or more active other cells in the selection of which other passive cell(s) to activate. Normally, the above exemplary procedures are triggered by a need to handover user equipment currently served by an active cell of a serving radio base station to a new target cell. Once the selected cell has been activated, it can be used as target cell.

For a better understanding, examples of various network contexts in which embodiments can be applied will now be schematically described.

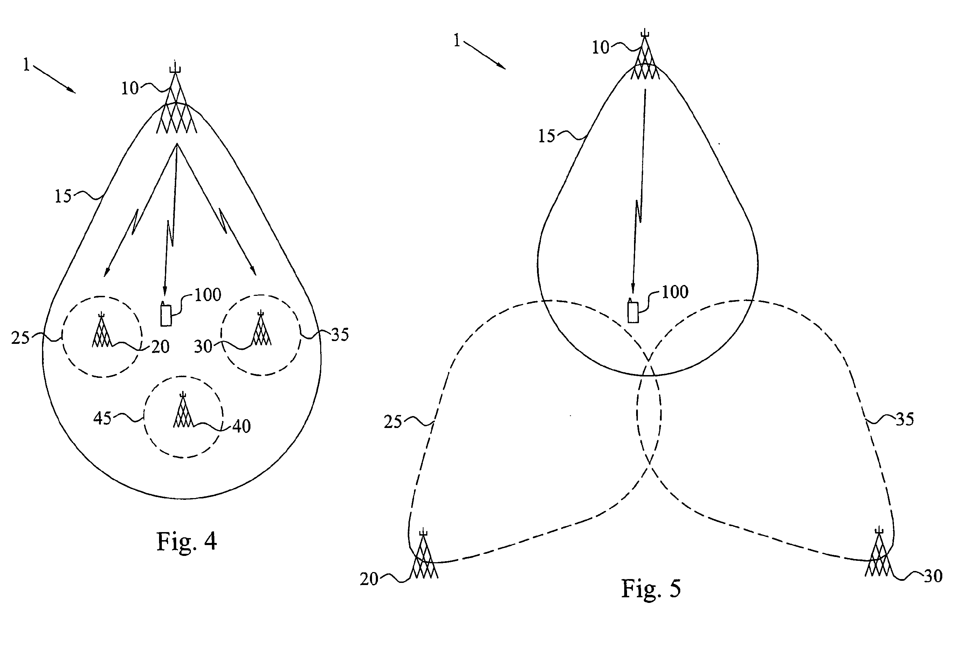

Fig. 4 is an overview of a portion of a radio communication network according to an exemplary embodiment. In this example, a radio base station 10 manages an active cell 15 and therefore transmits cell-defining information for the active cell 15. The geographical area of the cell 15 at least partly encompasses one or more, three in the example of Fig. 4, other cells 25, 35, 45 having comparatively smaller geographical areas. The active cell 15 is typically denoted a macro cell in the art, whereas the smaller cells 25, 35, 45 could be for example micro or pico cells.

In an embodiment, the micro cells 25, 35, 45 are currently passive, implying that their corresponding radio base stations 20, 30, 40 currently do not transmit any cell-defining information for the cells 25, 35, 45. The passive cells 25, 35, 45 are therefore invisible for user equipment 100 present in the area of or near a passive cell 25, 35, 45.

This scenario is advantageous, for example, if the radio base stations 20, 30, 40 of the passive cells 25, 35, 45 are planned to be used for particular services that cannot be handled or not handled sufficiently well by the radio base station 10 of the active cell 15. A typical example could be when the passive cells 25, 35, 45 and their radio base stations 20, 30, 40 are planned as broadband access technology, which only needs to be active when a service requiring high bandwidth is required. If no such high bandwidth services are needed, the traffic is instead served by the overlapping access technology provided by the radio base station 10 and its active cell 15. In such a case, the active cell 15 and radio base station 10 may be of a given radio access technology, such as the Global System for Mobile Communications (GSM), Wideband Code Division Multiple Access (WCDMA), Code Division Multiple Access 2000 (CDMA2000) or Time Division - Synchronous CDMA (TDSCDMA), whereas the passive cells 25, 35, 45 and their radio base stations 20, 30, 40 may be of another radio access technology, such as Long Term Evolution (LTE), capable of handling high bandwidth services.

A further possible scenario could be that the passive cells 25, 35, 45 are only activated if the need for radio communication services in the macro cell 15 increases so much that the traffic load in the macro cell 15 becomes too large for the radio base station 10 to handle effectively. In such a case, some of the traffic could instead be handled by at least one of the radio base stations 20, 30, 40 for the passive cells 25, 35, 45, which then need(s) to be activated.

Fig. 5 illustrates another embodiment of a radio communication network in which the controlled cell activation can be implemented. In this example, the radio communication network 1 comprises at least one active cell 15 having a radio base station 10 managing the cell 15 and transmitting cell-defining information applicable for the active cell 15. The active cell 15 has one or more, two in the example of Fig. 5, passive neighboring cells 25, 35, the radio base stations 20, 30 of which having silent transmitters and therefore not transmitting any cell-defining information for the respective passive cells 25, 35.

The transmitting radio base station 10 is typically a currently serving radio base station 10 for the user equipment 100. The user equipment 100 could be traveling away from the radio base station 10 and towards the geographical area of one of the currently passive cells 25, 35. As the cells 25, 35 are passive and their radio base stations 25, 35 do not transmit any cell-defining information, the user equipment 100 cannot find the cells and thus not perform any signal strength measurements for the passive cells 25, 35. By using any of the exemplary procedures discussed above, it is possible to control the activation of such cells in the radio communication network. Once one or more of the passive cells 25, 35 have been activated, traditional uplink and downlink signal strength measurements can also be performed as usual and the candidate cells 25, 35 can then if desired be further evaluated for the purpose of a potential handover.

The passive other cell may thus for example be a neighbor cell of the active cell, usually with a partial overlap between the neighboring cells. In the case of a macro-micro cell context, the passive other cell may be a micro cell included within the area of an active macro cell. In principle it is also possible for a micro cell to be active, whereas the larger encompassing macro cell is passive.

It should also be understood that radio base stations, such as the previously mentioned NodeB and eNodeB, may be capable of serving multiple, i.e. at least two, cells, of which a subset of one or more cells may be passive while another subset may be active.

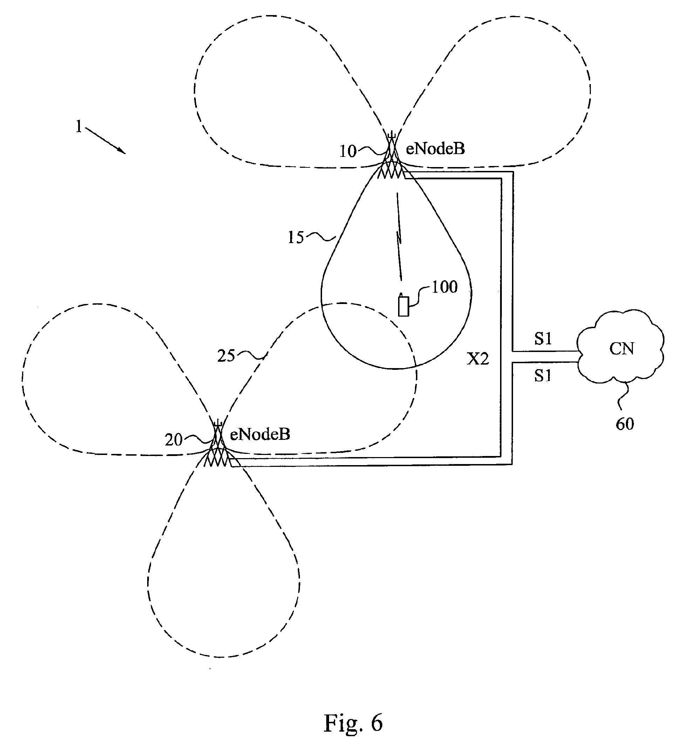

Fig. 6 is an overview of a radio communication system according to yet another exemplary embodiment. In this example, the radio communication system is a LTE radio communication network 1. The LTE radio access network (RAN) generally has one fundamental node type, the eNodeB 10, 20. Each eNodeB 10, 20 is in charge of a set of one or more cells 15, 25. The cells 15, 25 of an eNodeB 10, 20 do not need to be using the same antenna site but can have separate dedicated antenna sites.

In the example of Fig. 6, the eNodeB 10, 20 is normally in charge of a number of functionalites, including single cell radio resource management (RRM) decisions, handover decisions, scheduling of user equipment in both uplink and downlink in its cells.

The X2 interface connects any eNodeB 10 in the radio communication network 1 with any other eNodeB 20. This X2 interface is mainly used to support active-mode mobility but may also be used for multi-cell RRM functions. Another interface, the S1 interface, connects the eNodeB 10, 20 to the core network 60.

The core network 60 for LTE is often denoted Evolved Packet Core (EPC) to indicate that it is a radical evolution from the GSM/General Packet Radio Service (GPRS) core network. The EPC is developed as a single-node architecture with all its functions in one node, except the Home Subscriber Server (HSS) (not shown) that is a node or database containing details of each user equipment subscriber that is authorized to use the LTE core network. The EPC connects to the LTE RAN via the-above mentioned S1 interface, to the Internet (not shown) via the SGi interface and to the HSS (not shown) using the S6 interface.

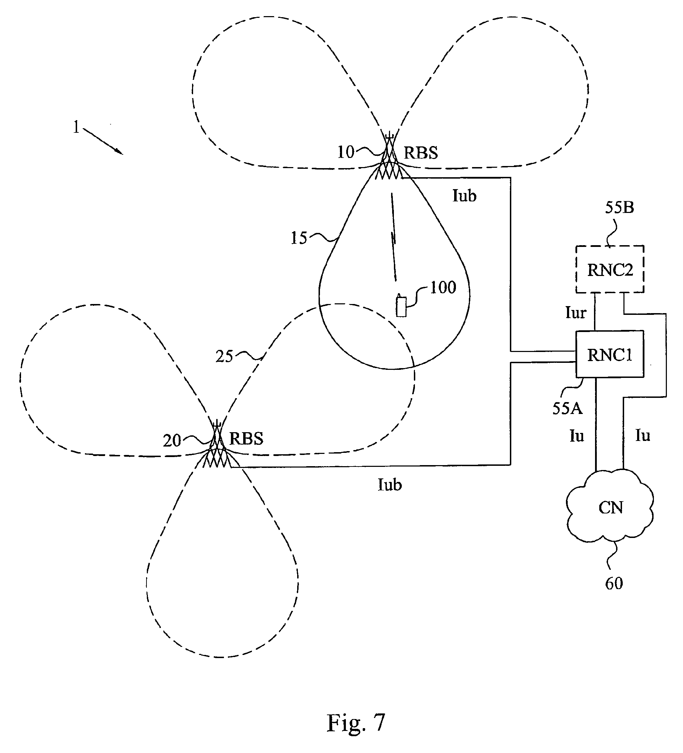

Fig. 7 is an overview of a radio communication system according to a further exemplary embodiment. In this example, the radio communication system is WCDMA/High Speed Packet Access (HSPA) radio communication network 1. The WCDMA/HSPA radio access network (RAN) generally has two fundamental logical node types: the Radio Network Controllers) (RNC) 55A, 55B and the node connecting to the antenna of the cells 15, 25, the NodeB 10, 20 or Radio Base 5 Station (RBS).

The RBS/NodeB 10, 20 is the logical node handling the transmission and reception for a set of one or more cells 15, 25. Logically, the antennas of the cells 15, 25 belong to the NodeB 10, 20 but they are not necessarily located at the same antenna site. The NodeB 10, 20 owns its hardware but not the radio resources of its cells 15, 25, which are owned by the RNC 55A, 55B to which the NodeB 10, 20 is connected. This RNC-NodeB connection is effected using the lub interface.

Each RNC 55A in the radio communication network 1 can connect to every other RNC 55B via the lur interface. Thus, the lur interface is a network wide interface making it possible to keep one RNC 55A as an anchor point for user equipment 100 and hide mobility from the core network 60.

The RNC 55A, 55B is the node connecting the radio access network to the core network 60 via the lu interface. For WCDMA/HSPA, the core network 60 is normally based on the GSM core network and therefore comprises two distinct domains; the circuit-switched (CS) domain with the Mobile Switching Centre (MSC) (not shown), and the packet-switched (PS) domain with the Serving GPRS Support Node (SGSN) (not shown) and the Gateway GPRS Support Node (GGSN) (not shown). Common for the two domains is the Home Location Register (HLR).

In the PS domain, the SGSN is connected to a GGSN via a Gn or Gp interface and the GGSN has its Gi interface out to external packet networks, such as the Internet.

The above exemplary procedures set forth in connection with Figs. 1-3 may be implemented for execution in a network unit associated with the radio communication network. This could for example be the serving radio base station (RBS) or a radio network controller (RNC) within the radio communication network.

In the case of downlink (DL) measurements, the relevant user equipment measures DL signal strength and report back to the relevant serving RBS or the associated RNC, which then selects a suitable passive target cell for activation.

In the case of uplink (UL) measurements, each relevant RBS managing a respective passive cell measures UL signal strength and report back to the relevant serving RBS or the associated RNC. Preferably, the relevant network unit receives, for each of a number of other cells, information representative of whether the cell is passive or active from the corresponding radio base stations responsible for the other cells.

There are several different ways of causing a radio base station to start transmission of cell-defining information for a particular cell. Illustrative examples include signaling a cell-activation command over an RBS-RBS interface such as the X2 interface, or over an RNC-RBS interface such as the lub interface. Yet another illustrative example includes signaling random access (RA) enabling information from the serving radio base station to user equipment in the selected cell and requesting the user equipment to transmit a random access (RA) to the corresponding radio base station managing the selected cell to trigger activation of the selected cell.

A previously indicated, the embodiments can also be applicable in a radio communication network having multiple different radio access networks (RANs) and optionally different radio access technologies (RATs).

In the following, various exemplary embodiments will be described in more detail, mainly with reference to LTE and GSM communication systems. The invention is not limited thereto.

In an LTE communication system for example, it may be desirable to minimize the number of LTE cells to turn on to handle UE mobility. The serving RBS determines one or more plausible target cells for selective activation, and only turns these on. This will minimize or at least reduce the consumed power.

In a particular exemplary embodiment, the serving RBS in an LTE system (could be an RNC in a different system) may determine plausible target cells by having the UE measure on pilots of an overlapping radio access network (RAN) and/or radio access technology (RAT). For instance, the UE may be asked to perform measurement on GSM BCCHs, and based on which GSM base stations are heard, one or more LTE cells are selected to be turned on.

Although GSM is indicated as the overlapping RAT in this and other examples, it should be understood that the overlapping RAN/RAT may be any cellular system, including GSM, WCDMA, CDMA2000, TDSCDMA or even another LTE system. Most areas where LTE is rolled out already have coverage by at least one other radio access technology (RAT), such as GSM, CDMA2000, TDSCDMA or WCDMA.

For LTE, as for all other 3GPP RAT, the mobility is normally managed by having the UE measure the received signal strength of the pilots transmitted in the surrounding cells. The measurement results are sent to the serving RBS which interprets them and determines whether another cell is better, and a handover to that cell shall be triggered.

The LTE RBS can ask the UE to do measurement on GSM. This is included in the standard to support handover to GSM when leaving the LTE coverage area. Typically, initial deployment of LTE will not have equally good coverage as GSM.

### Co-sited scenario

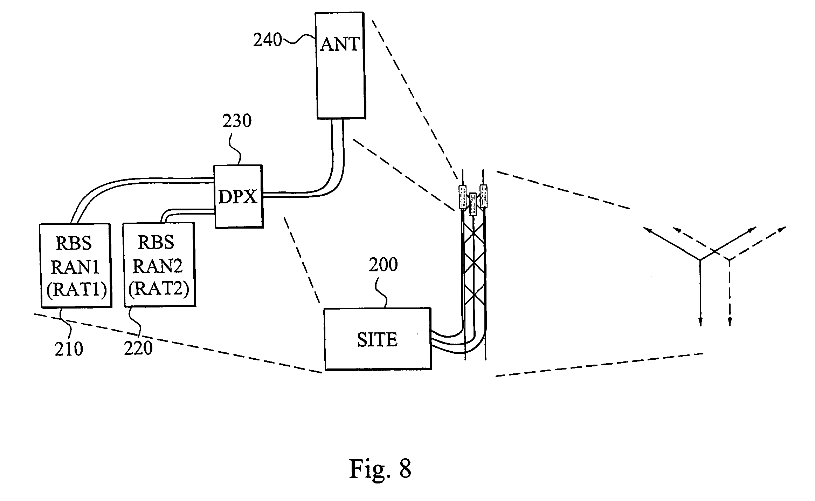

A possible deployment for LTE is to reuse the sites of GSM, e.g. put LTE RBS next to a GSM RBS on the GSM site. Furthermore, the feeders and antenna units may be reused, for appearance reasons and for wind load reasons. Such an example is shown in Fig. 8.

Fig. 8 is a schematic diagram illustrating co-siting of radio base stations of different radio access networks (RANs) and/or different radio access technologies (RATs) according to an exemplary embodiment. Fig. 8 illustrates a co-sited cell representation, a typical physical site 200 with shared feeder cables and antennas, and a more detailed view of the radio base stations (RBSs) 210, 220 and duplex filter 230 in the site 200, as well as a sector antenna 240. The radio base stations 210, 220 may be of different radio access technologies (RATs), typically operating on different frequency bands and having a duplex filter for sharing the feeder. The associated antenna unit 240 typically houses two diversity antennas - one diversity antenna per band. Alternatively, the radio base stations are of the same RAT, but anyway belonging to different radio access networks. Of course, also other co-siting solutions exist, with or without shared equipment. The cells are normally virtually overlapping.

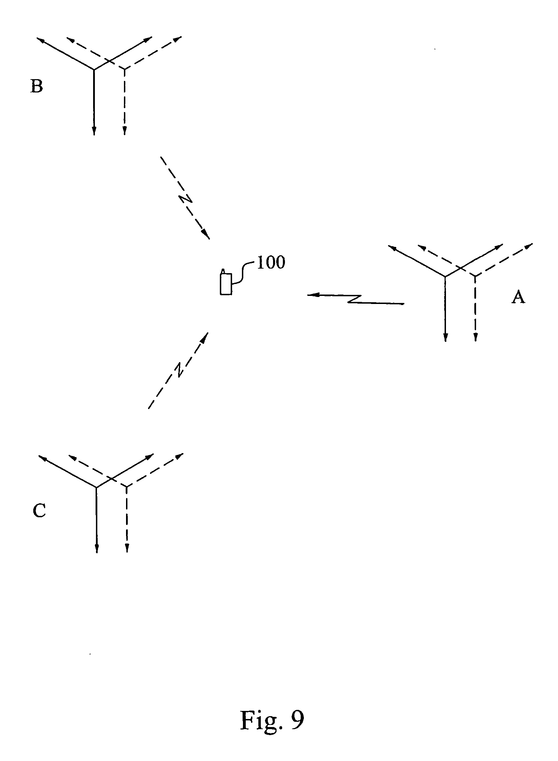

Fig. 9 is a schematic diagram illustrating an example of a common cell plan between different radio access networks (RANs) and/or different radio access technologies (RATs). For example, a cell plan of a first RAT such as LTE may be indicated by solid arrows and a cell plan a second RAT such as GSM may be indicated by dashed arrows. This could for instance be the result of the co-siting as illustrated in Fig. 8.

With reference to Fig. 9, assume that LTE RBS A is the serving RBS for the UE 100, and that the cells of LTE RBSs in B and C are passive.

When the UE 100 is moving out of the coverage area of the serving RBS A, the UE is told to measure the signal strength in the cells of the GSM RBSs at B and C. The signal strength measurements are performed by the UE 100 and reported back to serving RBS A.

By way of example, the serving RBS A then calculates the path loss from RBS B and RBS C and determines, based on these calculations, which one is the best handover candidate. Serving RBS A sends a message to the selected RBS (B or C) to turn its relevant cell(s) on, and start transmitting cell-defining information such as pilot and/or synchronization signals. For LTE, such control signaling can be sent using the X2 interface.

Preferably, the LTE RBS A will have knowledge about the pilot frequencies of the RBSs of the other RAT on B and C. This can either be a static configuration or information supplied by the other RAT, e.g. by LTE RBS asking the co-sited GSM RBS via a site-local control interface. The information can then be exchanged between LTE RBSs using the X2 interface.

It should be noted that cells which are already transmitting pilot signals may be detected by the UE by normal mobility procedures: measuring on DL pilots and synchronization channels, and acting accordingly. It should also be noted that the initiation of determining plausible target cells is typically triggered by the necessity to handover the UE, e.g. due to poor radio path or overload in the serving cell.

### Generic scenario

When the LTE deployment is extended, not all LTE RBSs will be co-sited with GSM RBSs.

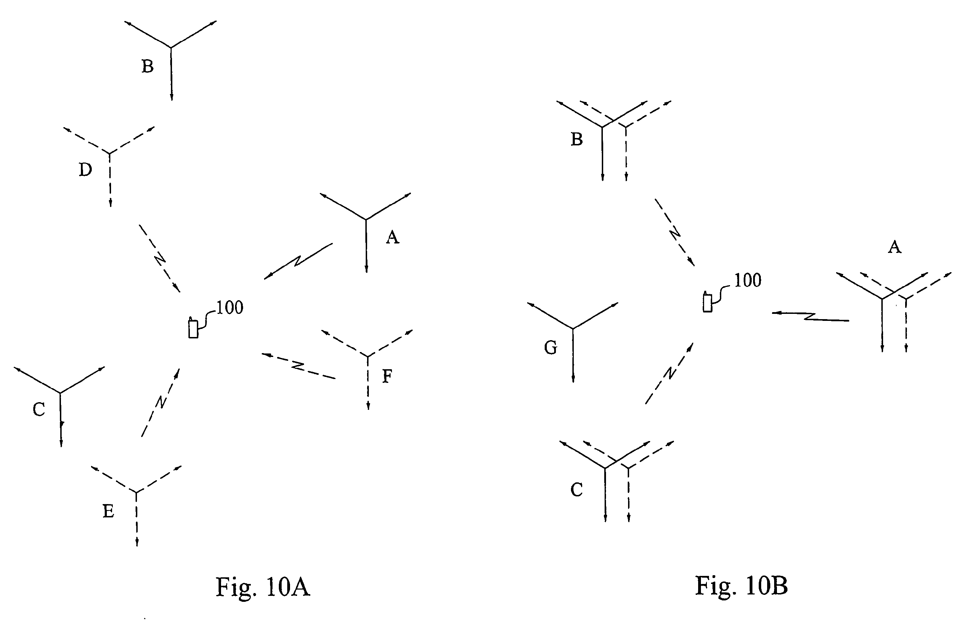

Examples of more generic scenarios will now be outlined with reference to Figs. 10A B.

Fig. 10A is a schematic diagram illustrating an example of a cell plan in which radio base stations of different radio access networks (RANs) and/or different radio access technologies (RATs) are not co-sited. This could by way of example represent a scenario in which LTE RBSs are not co-sited with GSM RBSs; perhaps because the other RAT belongs to another operator.

Fig. 10B is a schematic diagram illustrating an example of a partially common cell plan according to an exemplary embodiment. This could by way of example represent a scenario in which an LTE-only RBS is placed in-between the sites with co-sited RBSs. This can be due to a need for higher capacity in that area for LTE, but not for GSM.

For a more generic case, the LTE RBS needs to know which LTE cells are serving the same area as the GSM cells. The UE is preferably asked to perform signal strength measurements on GSM, just as for the previous case described in connection with Fig. 9, but the report may result in the serving RBS possibly selecting more than one LTE RBS. For example, in the case of Fig.10B, the RBS A may request both RBS C and RBS G to turn on their respective cells.

This provides a very efficient way of determining target radio base stations in a scenario with an overlapping RAT. The user will not see any degradation in the service as the relevant cells are turned on just in time.

In another particular exemplary embodiment, the serving RBS in an LTE system (could be an RNC in a different system) may determine one or more plausible target cells by ordering uplink (UL) measurements on the UE transmissions from a selection of possible target cells. Each selected RBS measures the UL signal strength of one or more UEs handled by the serving RBS, and reports the measurement results to the serving RBS (and optionally further on to the RNC depending on the network type and the design configuration), which then may estimate, e.g. the path loss and thus determine how suitable the considered RBS is as target RBS.

As previously mentioned, for LTE, as for all other 3GPP RAT, the mobility is normally managed by having the UEs measure the received signal strength of the pilots transmitted in the surrounding cells. The drawback with the standardized way is that all RBSs need to transmit signals to allow the UEs to collect the measurements. In the following embodiment, a complementary or alternative solution is provided to evaluate neighboring cells, which allow the RBSs to enter a low power mode where no cell-defining information such as pilots and/or synchronization signals are transmitted. The serving RBS (or an RNC in a different communication system) tells a potential target RBS in passive mode or low power mode to measure the uplink (UL) received signal strength for UEs that are in need of being handed over to another RBS.

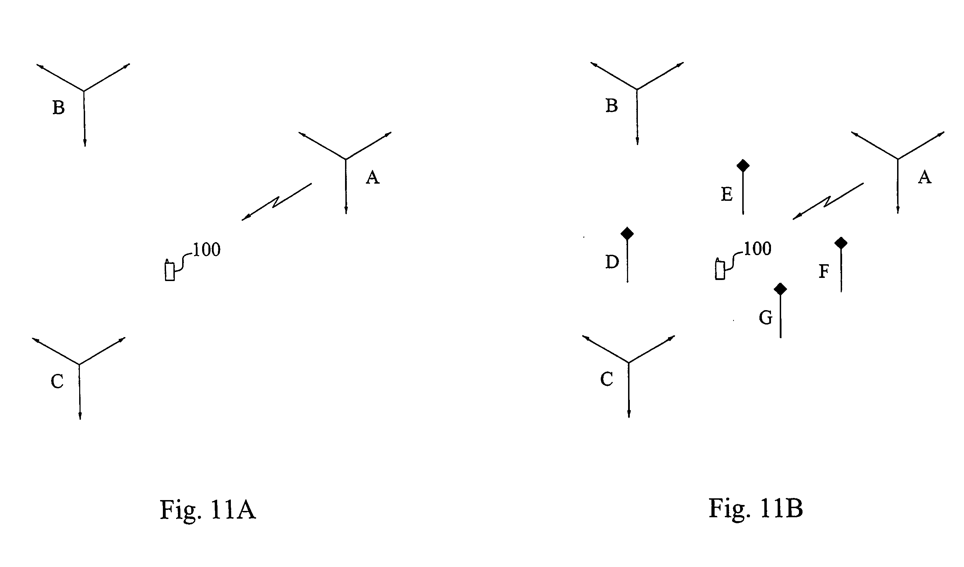

Fig. 11A is a schematic diagram illustrating a simple example of a cell plan for a given radio access network/technology. This could for instance be a normal LTE cell plan; a hexagonal cell plan with three RBSs is shown in Fig.11A.

Fig. 11B is a schematic diagram illustrating an example of a cell plan for a given radio access network/technology extended with a number of micro cells. In this example, the cell plan has been extended with a number of micro cells, e.g. for capacity enhancements.

In the examples of Figs. 11A-B, the UE 100 is first served by RBS A. Each of the other RBSs, and corresponding cells, can either be turned on or turned off (passivellow-power mode).

### Cell state information

According to the standard solution, each LTE RBS knows which RBSs exist in the vicinity, so called neighbor RBSs, and have direct contact with them on the back-haul using the so called X2 interface. The LTE RBS also knows which cells are neighbor cells to each of its own cells, i.e. which cells the UE is expected to hear, and may potentially be handed over to.

An extension proposed here is based on each LTE RBS signaling the state of its cells with respect to active/passive mode of the cell (i.e. cell-defining information being transmitted or not) to the neighbor RBSs, so that each LTE RBS knows what the UE may hear and may not hear.

### Relative path loss estimate

In an exemplary embodiment, the UE may measure the received signal power for those cells that are transmitting pilots, and send measurement reports to the serving RBS. This is according to the standard, and provides the serving RBS with a relative path loss estimate between the different RBSs (including its own).

For cells that are not transmitting pilots, the serving RBS (A) preferably sends a signal requesting the corresponding RBS B-G (or a suitable subset thereof) to do UL signal strength measurements. The RBSs B-G perform measurements accordingly and send respective measurement reports to the serving RBS A.

Typically, the serving RBS A also measures the signal strength received at its own receiver from the UE, and compares this with the measurement reports from the measuring RBSs B-G. This gives a relative path loss difference.
Based on the combined measurements made by the measuring RBSs B-G and optionally also by the UE, the serving RBS can determine which cell is best suited to serve the UE. If the cell is turned off (passive/low power mode), the serving RBS sends a signal to the corresponding RBS requesting the cell to be turned on.

### Time synchronized RBSs

In most applications, the RBSs are time synchronized, i.e. they share a common time base. This can for instance be GPS originating time.

### UL measurements

The serving RBS request UL measurements to be done by another RBS. For example, the request includes information about a time interval and a frequency interval for the measurements, and for which cell the measurement is valid.

As the two RBSs are both locked to a common time reference, the measurement time can be expressed in that time base.

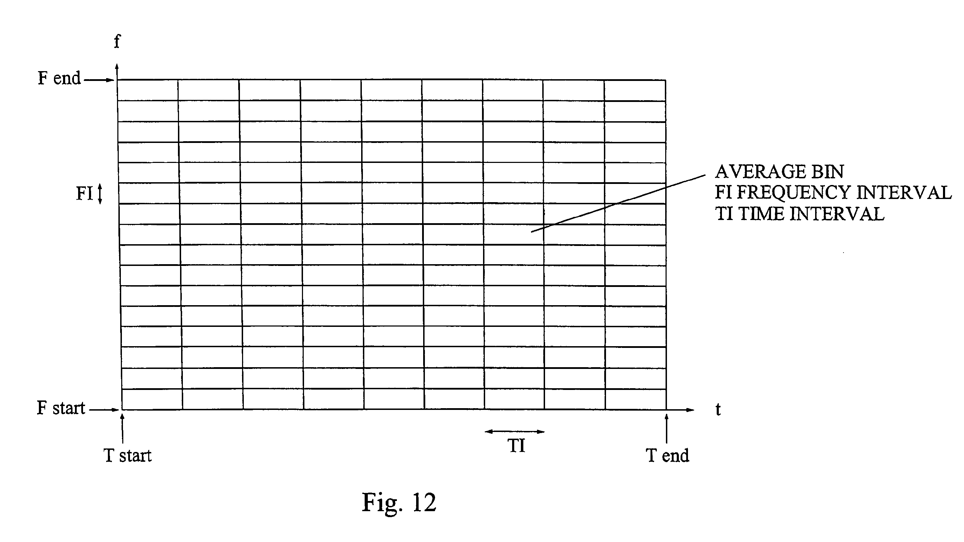

The measuring RBS makes a signal power measurement. The measurement generates a matrix where each value represents the average power of the received signal for time and frequency interval, as can be seen in Fig. 12.

The frequency interval (FI) is typically 1 PRB frequency size in LTE, i.e.180 kHz.
The time interval (TI) is typically one UL slot, e.g. 500 us.

The minimal measurement report size can be achieved when the systems are time synchronized. Then the measurement request includes only one frequency and time interval, e.g. measure on a certain 180 kHz interval for 500 us at a certain time.

The shorter the total measurement time, the smaller the report will be and also the less power consumption in the measuring RBS.

### Requesting a UL measurement

When the serving RBS wants a UL measurement to be done, it determines a time and frequency interval at which it is suitable to schedule the UE for UL transmissions. If it is interesting to have measurements performed on more than one UL, the UL measurements are preferably scheduled adjacent to each other.

The serving RBS then sends a measurement request to the measuring RBS.

The serving RBS then executes the UL scheduling, by sending a scheduling grant to the UE. The UE will then transmit data.

The received signal strength is stored.

The serving RBS will receive the measurement report from the measuring RBS. As the measuring RBS is time synchronized, the comparison with the own received signal strength can be made directly.

### Time unsynchronized RBSs

In some applications, the RBSs do not share a common time base, or the synchronization is of too low precision. The measurement report and processing will then be slightly more complicated.

### UL measurements

The serving RBS may request UL measurements to be done by another RBS. For example, the request includes information about a time interval and a frequency interval for the measurements, and for which cell the measurement is valid.

As the two RBSs are not locked to a common time reference, the measurement time is preferably expressed relative to the time of transmission of the request. An extra uncertainty will be added which needs to be handled when interpreting the measurement report.

The measuring RBS makes a signal power measurement. The measurement generates a matrix where each value represents the average power of the received signal for a given time and frequency interval, as can be seen in Fig. 12.

As for the time synchronized case, the frequency interval (FI) is typically 1 PRB frequency size in LTE, i.e.180 kHz.

The time interval (TI) is typically significantly less than one UL slot, e.g. 10 us.

The total measurement length in time is prolonged since the RBSs are not synchronized, as extra uncertainty will be added, and it is important that the measurement captures an UL transmission of the relevant UE.

### Requesting a UL measurement

When the serving RBS wants a UL measurement to be done, it determines a time and frequency interval at which it is suitable to schedule the UE for UL transmissions. If it is interesting to have measurements performed on more than one UL, the UL measurements are preferably scheduled adjacent to each other.

The serving RBS then sends a measurement request to the measuring RBS. As the measuring RBS is not time synchronized, a margin before and after the UL scheduling time instant is added, and the report time interval (TI) is set short.

The serving RBS then executes the UL scheduling, by sending a scheduling grant to the UE. The UE will then transmit data.

The received signal strength is stored, both related to the UE being measured on, but also of the slots before and after.

The serving RBS will receive the measurement report from the measuring RBS.

As the measuring RBS is not time synchronized, the stored UL signal strength is compared with the reported signal strength to find where in the time domain in the matrix the relevant UE has its samples. If this cannot be determined easily, the measurement needs to be redone, with e.g. blank time slot ahead, or with an easily found signal strength pattern.

This applies primarily to a traffic situation where RBSs are operating in passive/low-power mode. The traffic is thus typically not very high, and it is reasonable to optimize the UL scheduling to simplify the measurements, e.g. by:
- Having no UL transmissions directly before and after the UE of interest.
- Having the UE of interest transmitting continuously over a long period of time, e.g.10 ms.

This provides a complementary or alternative solution to UE based measurements, where mobility can be handled without turning on the transmitters of cells not carrying traffic. The user will not see any degradation in the service as the LTE cells are turned on just in time.

As previously mentioned, benefits include reduced power consumption and operational costs, e.g. by minimizing or at least reducing the time in which the radio base station(s) have to transmit cell-defining information and/or reducing the time in which the radio base station(s) need to have its receiver(s) operational.

By way of example, for uplink measurements, handover measurements can be performed without turning on the RBS transmitters. The measurements can also be ordered by the relevant network unit (e.g. the serving RBS) based on an assessment that the considered RBSs will likely be good target handover candidates. In this way, the total number of measurements can be limited. Overall, the measurement time period and the signaling will also be limited, thus minimizing the load in the transport network and the power consumption.

It is also possible to select a set of possible target handover candidates based on measurements on so-called references with known geographic locations, thus providing a rough estimate of the location of the user equipment. This limits the number of RBSs that actually need to perform signal strength measurements or turn on their transmitters.

The above procedures may be implemented in an apparatus or corresponding controller module by hardware or a suitable combination of software and processing hardware for executing the software.

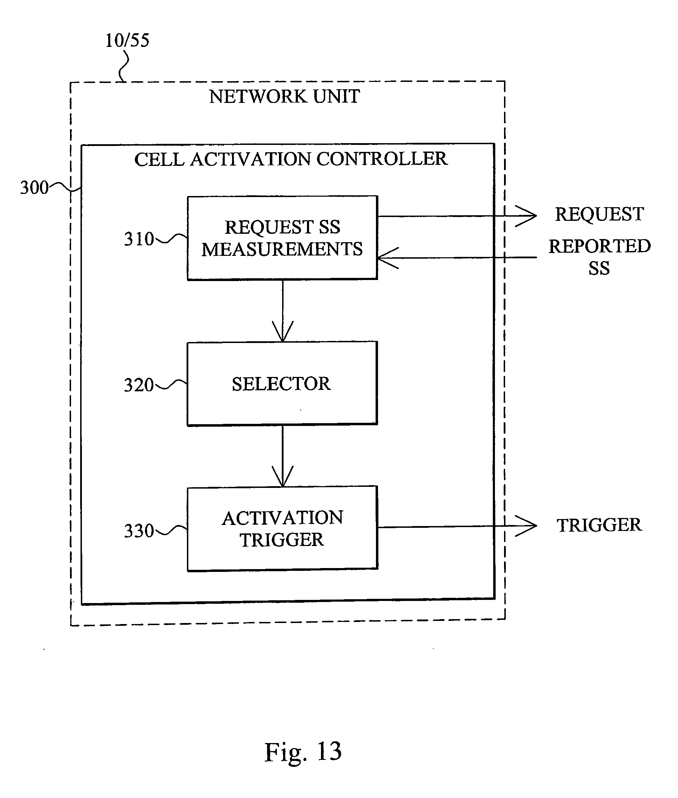

Fig. 13 is a schematic block diagram of a cell activation controller or apparatus for controlling cell activation according to an exemplary embodiment. Basically, the apparatus 300, also referred to as a cell activation controller, comprises a unit 310 for requesting signal strength (SS) measurements and receiving reported measurements, a cell selector 320, and a cell activation trigger unit 330. The unit 310 for requesting signal strength measurements is configured for requesting such measurements in an area of at least one passive other cell of a radio base station currently not transmitting any cell-defining information for the passive cell. The unit 310 also receives measurement reports from the relevant measuring unit(s). The selector 320 is configured for selecting on or more passive cells for activation based on received information representative of the requested signal strength measurements. The cell activation trigger unit 330 is configured for requesting the selected cell to be activated by causing the corresponding radio base station managing the selected cell to start transmission of cell-defining information to assist the user equipment in finding the cell for radio communication service.

The cell activation controller 300 may be implemented in a network unit associated with the radio communication network such as a radio base station 10 or a radio network controller 55.

In a particular example, the unit 310 for requesting signal strength measurements is configured for requesting user equipment to perform and report downlink measurements of received cell-defining information from one or more radio base stations of another overlapping radio access network (which may be of another radio access technology). The selector 320 is then configured to operate based on reported downlink measurements of the overlapping radio access network.

In another example, the unit 310 for requesting signal strength measurements is configured for requesting one or more radio base stations managing a respective passive cell to perform and report uplink measurements of user equipment transmissions. In this case, the selector 320 is configured to operate based on reported uplink measurements of user equipment transmissions. Optionally, the selector 320 is configured to operate also based on reported downlink measurements by user equipment of transmissions in one or more other active cell(s).

Other examples and/or optional features of the cell activation controller will be described below:
Preferably, the cell activation controller 300 is configured to collect and consider signal strength measurements in a plurality of passive cells to allow a selection of a suitable target cell for activation among a larger number of candidate cells.

The cell activation controller, or alternatively the network unit in which it is implemented, is preferably configured to receive, for each of a number of other cells, information representative of whether the cell is passive or active from the corresponding radio base stations responsible for the other cells.

For the cell activation trigger unit 330, there are several different ways of causing the radio base station to start transmission of cell-defining information for a particular cell. For example, the trigger signal may be a cell-activation command over an inter-base-station interface such as the X2 interface or over a network-controller-base-station interface such as the lub interface. Yet another example includes signaling random access (RA) enabling information to user equipment in the selected cell and requesting the user equipment to transmit a random access (RA) to the corresponding radio base station managing the selected cell to trigger activation of the selected cell.

In the radio base station managing a passive cell to be activated, there is typically a transmitter controller that is capable of activating the passive cell by controlling the transmitter to start transmission of cell-defining information for the cell. The radio base station may also has access to a timer, and when this timer has expired and/or no or only very low amount of active traffic is or has been present in the active cell as detected by conventional means, the transmitter controller may for example inactivate the cell by controlling the transmitter to stop the transmission of the cell-defining information for the cell.

The transmitter controller may be associated with the power amplifier, the baseband processing as well as the actual transmission equipment in the radio base station.

The units 310 to 330 may all be implemented in one and the same physical apparatus in a network unit such as a radio base station, e.g. at a same site in the radio communication network or indeed be distributed at multiple geographical sites that are though collectively handled as a single radio base station or (e)NodeB.
In the above presented block diagram of Fig. 13, only the units directly involved in the controlled cell activation as disclosed herein are explicitly illustrated. It is therefore anticipated that a network unit such as a radio base station including a corresponding apparatus for cell activation comprises other units and functionalities used in their traditional operations.

The embodiments described above are merely given as examples, and it should be understood that the present invention is not limited thereto. Further modifications, changes and improvements which retain the basic underlying principles disclosed and claimed herein are within the scope of the invention.

## Claims

1. A method of controlling activation of at least one cell in a radio communication network (1) comprising a number of radio base stations (10, 20;10, 20, 30;10, 20, 30, 40), at least one of said radio base stations, referred to as a serving radio base station (10), managing an active cell (15) serving user equipment (100), said method induding the steps of:
- requesting (S1; S11; S21) signal strength measurements in an area of at least one passive other cell (25; 25, 35; 25, 35, 45) of a radio base station (20; 20, 30; 20, 30, 40) currently not transmitting any cell-defining information for said passive other cell;
- selecting (S2; S12; S22), based on received information representative of said signal strength measurements, at least one passive other cell for activation; and
- requesting (S3; S13; S23) said selected passive other cell to be activated by causing the corresponding radio base station managing the selected cell to start transmission of cell-defining information, the method **characterized in that**
said step (S1; S11; S21) of requesting signal strength measurements includes the step (S11) of requesting said user equipment to perform and report downlink measurements of received cell-defining information from at least one radio base station of another overlapping radio access network, and said step (S12) of selecting at least one passive other cell for activation is based on reported downlink measurements of said overlapping radio access network, or
said step (S1; S11; S21) of requesting signal strength measurements includes the step (S21) of requesting at least one radio base station managing a respective passive other cell to perform and report uplink measurements of user equipment transmissions, and said step (S22) of selecting at least one passive other cell for activation is based on reported uplink measurements of user equipment transmissions.

2. The method of claim 1, wherein said cell managed by said serving radio base station (10) and said at least one passive other cell are associated with a first radio access technology, and said overlapping radio access network is associated with a second different radio access technology.

3. The method of daim 1, wherein said step (S2; S12; S22) of selecting at least one passive other cell for activation is also based on reported downlink measurements by said user equipment (100) of transmissions in at least one active other cell.

4. The method of daim 1, wherein said step (S1; S11; S21) of requesting signal strength measurements comprises the step of requesting signal strength measurements in a plurality of passive other cells (25, 35; 25, 35, 45) of a number of corresponding radio base stations (20, 30; 20, 30, 40), and said step (S2; S12; S22) of selecting at least one passive other cell for activation comprises the step of selecting a passive other cell for activation among said plurality of passive other cells based on the received information representative of said signal strength measurements.

5. The method of daim 1, wherein said steps of requesting signal strength measurements, selecting at least one passive other cell for activation and requesting said selected passive other cell to be activated are triggered by a need to handover user equipment (100) currently served by the serving radio base station (10) to a new target cell, wherein the selected cell can be used as target cell after the selected cell has been activated.

6. The method of daim 1, wherein said step of (S3; S13; S23) requesting said selected passive other cell to be activated comprises the step of signaling a cell-activation command between radio base stations, or the step of signaling random access enabling information from said serving radio base station (10) to user equipment (100) in the selected cell to cause said user equipment (100) to transmit a random access to the corresponding radio base station managing the selected cell in order to trigger activation of the selected cell.

7. The method of daim 1, wherein said steps of requesting signal strength measurements, selecting at least one passive other cell for activation and requesting said selected passive other cell to be activated are performed by a network unit (10; 55) associated with said radio communication network, wherein said network unit is said serving radio base station (10) or a radio network controller (55) of said radio communication network.

8. The method of daim 7, further comprising the step of said network unit (10; 55) receiving, for each of a number of other cells, information representative of whether the cell is passive or active from the corresponding radio base stations responsible for the other cells.

9. An apparatus (300) for controlling activation of at least one cell in a radio communication network (1) comprising a number of radio base stations (10, 20; 10, 20, 30; 10, 20, 30, 40), at least one of said radio base stations, referred to as a serving radio base station (10), managing an active cell (15) serving user equipment (100), said apparatus comprising:
- means (310) for requesting signal strength measurements in an area of at least one passive other cell (25; 25, 35; 25, 35, 45) of a radio base station (20; 20, 30; 20, 30, 40) currently not transmitting any cell-defining information for said passive other cell;
- means (320) for selecting, based on received information representative of said signal strength measurements, at least one passive other cell for activation; and
- means (330) for requesting said selected passive other cell to be activated by causing the corresponding radio base station managing the selected cell to start transmission of cell-defining information, said apparatus **characterized in that**
said means (310) for requesting signal strength measurements includes means for requesting said user equipment to perform and report downlink measurements of received cell-defining information from at least one radio base station of another overlapping radio access network, and said means (320) for selecting at least one passive other cell for activation is configured for selecting at least one passive other cell for activation based on reported downlink measurements of said overlapping radio access network, or
said means (310) for requesting signal strength measurements includes means for requesting at least one radio base station managing a respective passive other cell to perform and report uplink measurements of user equipment transmissions, and said means (320) for selecting at least one passive other cell for activation is configured for selecting at least one passive other cell for activation based on reported uplink measurements of user equipment transmissions.

10. The apparatus of daim 9, wherein said cell managed by said serving radio base station (10) and said at least one passive other cell are associated with a first radio access technology, and said overlapping radio access network is associated with a second different radio access technology.

11. The apparatus of daim 9, wherein said means (320) for selecting at least one passive other cell for activation is configured for selecting at least one passive other cell for activation also based on reported downlink measurements by said user equipment (100) of transmissions in at least one active other cell.

12. The apparatus of daim 9, wherein said means (310) for requesting signal strength measurements comprises means for requesting signal strength measurements in a plurality of passive other cells (25, 35; 25, 35, 45) of a number of corresponding radio base stations (20, 30; 20, 30, 40), and said means (320) for selecting at least one passive other cell for activation comprises means for selecting a passive other cell for activation among said plurality of passive other cells based on the received information representative of said signal strength measurements.

13. The apparatus of daim 9, wherein said means (310) for requesting signal strength measurements, said means (320) for selecting at least one passive other cell for activation and said means (330) for requesting said selected passive other cell to be activated are initially triggered by a need to handover user equipment (100) currently served by the serving radio base station (10) to a new target cell, wherein the selected cell can be used as target cell after the selected cell has been activated.

14. The apparatus of daim 9, wherein said means (330) for requesting said selected passive other cell to be activated comprises means for signaling a cell-activation command between radio base stations, or means for signaling random access enabling information to user equipment in the selected cell to cause said user equipment to transmit a random access to the corresponding radio base station managing the selected cell in order to trigger activation of the selected cell.

15. A network unit (10; 55) for use in a radio communication network, said network unit comprising an apparatus of any of the claims 9-14.

## Patentansprüche

1. Verfahren zum Steuern der Aktivierung mindestens einer Zelle in einem Funkkommunikationsnetzwerk (1), das eine Anzahl von Funkbasisstationen (10, 20; 10, 20, 30; 10, 20, 30, 40) umfasst, wobei mindestens eine der Funkbasisstationen, die als versorgende Funkbasisstation (10) bezeichnet wird, eine aktive Zelle (15) verwaltet, die Benutzerendgeräte (100) versorgt, wobei das Verfahren die Schritte einschließt:
- Anfordern (S1; S11; S21) von Signalstärkemessungen in einem Bereich mindestens einer passiven anderen Zelle (25; 25, 35; 25, 35, 45) einer Funkbasisstation (20; 20, 30; 20, 30, 40), die gegenwärtig keine zellendefinierende Information für die passive andere Zelle überträgt;
- Auswählen (S2; S12; S22) mindestens einer passiven anderen Zelle zur Aktivierung, und zwar auf der Grundlage empfangener Information, welche die Signalstärkemessungen darstellt; und
- Anfordern (S3; S13; S23), dass die ausgewählte passive andere Zelle aktiviert wird, indem bewirkt wird, dass die entsprechende Funkbasisstation, welche die ausgewählte Zelle verwaltet, mit der Übertragung von zellendefinierender Information beginnt, wobei das Verfahren **dadurch gekennzeichnet ist, dass**:
der Schritt (S1; S11; S21) des Anforderns von Signalstärkemessungen den Schritt (S11) einschließt: Anfordern, dass die Benutzereinrichtung Abwärtsstreckenmessungen empfangener zellendefinierender Information von mindestens einer Funkbasisstation eines anderen überlappenden Funkzugangsnetzwerks durchführt und meldet, und der Schritt (S 12) des Auswählens mindestens einer passiven anderen Zelle zur Aktivierung auf gemeldeten Abwärtsstreckenmessungen des überlappenden Funkzugangsnetzwerks beruht, oder
der Schritt (S1; S11; S21) des Anforderns von Signalstärkemessungen den Schritt (S21) einschließt: Anfordern, dass mindestens eine Funkbasisstation, die eine jeweilige passive andere Zelle verwaltet, Aufwärtsstreckenmessungen von Benutzereinrichtungsübertragungen durchführt und meldet, und der Schritt (S22) des Auswählens mindestens einer passiven anderen Zelle zur Aktivierung auf gemeldeten Aufwärtsstreckenmessungen von Benutzereinrichtungsübertragungen beruht.

2. Verfahren nach Anspruch 1, worin die durch die versorgende Basisstation (10) verwaltete Zelle und die mindestens eine passive andere Zelle einer ersten Funkzugangstechnologie zugeordnet sind und das überlappende Funkzugangsnetzwerk einer zweiten anderen Funkzugangstechnologie zugeordnet ist.

3. Verfahren nach Anspruch 1, worin der Schritt (S2; S12; S22) des Auswählens mindestens einer passiven anderen Zelle zur Aktivierung außerdem auf durch die Benutzereinrichtung (100) gemeldeten Abwärtsstreckenmessungen von Übertragungen in mindestens einer aktiven anderen Zelle beruht.

4. Verfahren nach Anspruch 1, worin der Schritt (S1; S11; S21) des Anforderns von Signalstärkemessungen den Schritt umfasst: Anfordern von Signalstärkemessungen in einer Vielzahl von passiven anderen Zellen (25, 35; 25, 35, 45) einer Anzahl von entsprechenden Funkbasisstationen (20, 30; 20, 30, 40), und der Schritt (S2; S 12; S22) des Auswählens mindestens einer passiven anderen Zelle zur Aktivierung den Schritt umfasst: Auswählen mindestens einer passiven anderen Zelle zur Aktivierung unter der Vielzahl von passiven anderen Zellen auf der Grundlage der empfangenen Information, welche die Signalstärkemessungen darstellt.

5. Verfahren nach Anspruch 1, worin die Schritte des Anforderns von Signalstärkemessungen, Auswählens mindestens einer passiven anderen Zelle zur Aktivierung und Anforderns, dass die ausgewählte passive andere Zelle aktiviert wird, durch einen Bedarf ausgelöst werden, die gegenwärtig durch die versorgende Funkbasisstation (10) versorgte Benutzereinrichtung (100) an eine neue Zielzelle zu übergeben, worin die ausgewählte Zelle als Zielzelle verwendet werden kann, nachdem die ausgewählte Zelle aktiviert worden ist.

6. Verfahren nach Anspruch 1, worin der Schritt des Anforderns (S3; S13; S23), dass die ausgewählte passive andere Zelle aktiviert wird, den Schritt umfasst: Signalisieren eines Zellenaktivierungsbefehls zwischen Funkbasisstationen; oder den Schritt: Signalisieren von Direktzugriffermöglichungsinformation von der versorgenden Funkbasisstation (10) zu der Benutzereinrichtung (100) in der ausgewählten Zelle, um zu bewirken, dass die Benutzereinrichtung (100) einen Direktzugriff an die entsprechende Funkbasisstation sendet, welche die ausgewählte Zelle verwaltet, um die Aktivierung der ausgewählten Zelle auszulösen.

7. Verfahren nach Anspruch 1, worin die Schritte des Anforderns von Signalstärkemessungen, Auswählens mindestens einer passiven anderen Zelle zur Aktivierung und Anforderns, dass die ausgewählte passive andere Zelle aktiviert wird, durch eine Netzwerkeinheit (10; 55) durchgeführt werden, die dem Funkkommunikationsnetzwerk zugeordnet ist, worin die Netzwerkeinheit die versorgende Funkbasisstation (10) oder ein Funknetzcontroller (55) des Funkkommunikationsnetzwerks ist.

8. Verfahren nach Anspruch 7, ferner den Schritt umfassend: durch die Netzwerkeinheit (10; 55) erfolgendes Empfangen von Information für jede aus einer Anzahl von anderen Zellen, die darstellt, ob die Zelle passiv oder aktiv ist, und zwar von den entsprechenden Funkbasisstationen, die für die anderen Zellen zuständig sind.

9. Vorrichtung (300) zum Steuern der Aktivierung mindestens einer Zelle in einem Funkkommunikationsnetzwerk (1), das eine Anzahl von Funkbasisstationen (10, 20; 10, 20, 30; 10, 20, 30, 40) umfasst, wobei mindestens eine der Funkbasisstationen, die als versorgende Funkbasisstation (10) bezeichnet wird, eine aktive Zelle (15) verwaltet, die eine Benutzereinrichtung (100) versorgt, wobei die Vorrichtung umfasst:
- Mittel (310) zum Anfordern von Signalstärkemessungen in einem Bereich mindestens einer passiven anderen Zelle (25; 25, 35; 25, 35, 45) einer Funkbasisstation (20; 20, 30; 20, 30, 40), die gegenwärtig keine zellendefinierende Information für die passive andere Zelle überträgt;
- Mittel (320) zum Auswählen mindestens einer passiven anderen Zelle zur Aktivierung, und zwar auf der Grundlage empfangener Information, welche die Signalstärkemessungen darstellt; und
- Mittel (330) zum Anfordern, dass die ausgewählte passive andere Zelle aktiviert wird, indem bewirkt wird, dass die entsprechende Funkbasisstation, welche die ausgewählte Zelle verwaltet, mit der Übertragung von zellendefinierender Information beginnt, wobei die Vorrichtung **dadurch gekennzeichnet ist, dass**:
die Mittel (310) zum Anfordern von Signalstärkemessungen Mittel zum Anfordern, dass die Benutzereinrichtung Abwärtsstreckenmessungen empfangener zellendefinierender Information von mindestens einer Funkbasisstation eines anderen überlappenden Funkzugangsnetzwerks durchführt und meldet, aufweisen, und die Mittel (320) zum Auswählen mindestens einer passiven anderen Zelle zur Aktivierung dafür konfiguriert sind, auf der Grundlage gemeldeter Abwärtsstreckenmessungen des überlappenden Funkzugangsnetzwerks mindestens eine passive andere Zelle zur Aktivierung auszuwählen, oder
die Mittel (310) zum Anfordern von Signalstärkemessungen Mittel zum Anfordern, dass mindestens eine Funkbasisstation, die eine jeweilige passive andere Zelle verwaltet, Aufwärtsstreckenmessungen von Benutzereinrichtungsübertragungen durchführt und meldet, aufweisen, und die Mittel (320) zum Auswählen mindestens einer passiven anderen Zelle zur Aktivierung dafür konfiguriert sind, auf der Grundlage gemeldeter Aufwärtsstreckenmessungen von Benutzereinrichtungsübertragungen mindestens eine passive andere Zelle zur Aktivierung auszuwählen.

10. Vorrichtung nach Anspruch 9, worin die durch die versorgende Basisstation (10) verwaltete Zelle und die mindestens eine passive andere Zelle einer ersten Funkzugangstechnologie zugeordnet sind und das überlappende Funkzugangsnetzwerk einer zweiten anderen Funkzugangstechnologie zugeordnet ist.

11. Vorrichtung nach Anspruch 9, worin die Mittel (320) zum Auswählen mindestens einer passiven anderen Zelle zur Aktivierung dafür konfiguriert sind, mindestens eine passive andere Zelle außerdem auf der Grundlage durch die Benutzereinrichtung (100) gemeldeter Abwärtsstreckenmessungen von Übertragungen in mindestens einer aktiven anderen Zelle zur Aktivierung auszuwählen.

12. Vorrichtung nach Anspruch 9, worin die Mittel (310) zum Anfordern von Signalstärkemessungen Mittel zum Anfordern von Signalstärkemessungen in einer Vielzahl von passiven anderen Zellen (25, 35; 25, 35, 45) einer Anzahl von entsprechenden Funkbasisstationen (20, 30; 20, 30, 40) umfassen und die Mittel (320) zum Auswählen mindestens einer passiven anderen Zelle zur Aktivierung Mittel zum Auswählen mindestens einer passiven anderen Zelle unter der Vielzahl von passiven anderen Zellen zur Aktivierung auf der Grundlage der empfangenen Information, welche die Signalstärkemessungen darstellt, umfassen.

13. Vorrichtung nach Anspruch 9, worin die Mittel (310) zum Anfordern von Signalstärkemessungen, die Mittel (320) zum Auswählen mindestens einer passiven anderen Zelle zur Aktivierung und die Mittel (330) zum Anfordern, dass die ausgewählte passive andere Zelle aktiviert wird, anfangs durch einen Bedarf ausgelöst werden, die gegenwärtig durch die versorgende Funkbasisstation (10) versorgte Benutzereinrichtung (100) an eine neue Zielzelle zu übergeben, worin die ausgewählte Zelle als Zielzelle verwendet werden kann, nachdem die ausgewählte Zelle aktiviert worden ist.

14. Vorrichtung nach Anspruch 9, worin die Mittel (330) zum Anfordern, dass die ausgewählte passive andere Zelle aktiviert wird, umfassen: Mittel zum Signalisieren eines Zellenaktivierungsbefehls zwischen Funkbasisstationen oder Mittel zum Signalisieren von Direktzugriffermöglichungsinformation an eine Benutzereinrichtung in der ausgewählten Zelle, um zu bewirken, dass die Benutzereinrichtung einen Direktzugriff an die entsprechende Funkbasisstation sendet, welche die ausgewählte Zelle verwaltet, um die Aktivierung der ausgewählten Zelle auszulösen.

15. Netzwerkeinheit (10; 55) zur Verwendung in einem Funkkommunikationsnetzwerk, wobei die Netzwerkeinheit eine Vorrichtung nach einem der Ansprüche 9 bis 14 umfasst.

## Revendications

1. Procédé de contrôle de l'activation d'au moins une cellule dans un réseau de radiocommunication (1) comprenant un certain nombre de stations de base radio (10, 20 ; 10, 20, 30 ; 10, 20, 30, 40), au moins une desdites stations de base radio, dont il est fait référence en tant que station de base radio de desserte (10), gérant une cellule active (15) desservant un équipement utilisateur (100), ledit procédé comprenant les étapes suivantes :
demander (S1 ; S11 ; S21) des mesures d'intensité de signal dans une zone d'au moins une autre cellule passive (25 ; 25, 35 ; 25, 35, 45) d'une station de base radio (20 ; 20, 30 ; 20, 30, 40) ne transmettant actuellement aucune information de définition de cellule pour ladite autre cellule passive ;
sélectionner (S2 ; S 12 ; S22), sur la base des informations reçues représentatives desdites mesures d'intensité de signal, au moins une autre cellule passive pour activation ; et
demander (S3 ; S13 ; S23) l'activation de ladite autre cellule passive sélectionnée en faisant commencer à la station de base radio correspondante gérant la cellule sélectionnée la transmission des informations de définition de cellule, le procédé étant **caractérisé en ce que** :
ladite étape (S1 ; S11 ; S21) de demande de mesures d'intensité de signal comprend l'étape (S11) comprenant de demander audit équipement utilisateur d'effectuer et de rapporter des mesures de liaison descendante d'informations de définition de cellule reçues provenant d'au moins une station de base radio d'un autre réseau d'accès radio chevauchant, et ladite étape (S 12) comprenant de sélectionner au moins une autre cellule passive pour activation est basée sur des mesures de liaison descendante rapportées dudit réseau d'accès radio chevauchant, ou
ladite étape (S1 ; S11 ; S21) de demande de mesures d'intensité de signal comprend l'étape (S21) comprenant de demander à au moins une station de base radio gérant une autre cellule passive respective d'effectuer et de rapporter des mesures de liaison montante de transmissions d'équipement utilisateur, et ladite étape (S22) de sélection d'au moins une autre cellule passive pour activation est basée sur des mesures de liaison montante rapportées de transmissions d'équipement utilisateur.

2. Procédé selon la revendication 1, dans lequel ladite cellule gérée par ladite station de base radio de desserte (10) et ladite au moins une autre cellule passive sont associées avec une première technologie d'accès radio, et ledit réseau d'accès radio chevauchant est associé avec une seconde technologie d'accès radio différente.

3. Procédé selon la revendication 1, dans lequel ladite étape (S2 ; S12 ; S22) de sélection d'au moins une autre cellule passive pour activation est également basée sur des mesures de liaison descendante rapportées par ledit équipement utilisateur (100) de transmissions dans au moins une autre cellule active.

4. Procédé selon la revendication 1, dans lequel ladite étape (S1 ; S11 ; S21) de demande de mesures d'intensité de signal comprend l'étape comprenant de demander des mesures d'intensité de signal dans une pluralité d'autres cellules passives (25, 35 ; 25, 35, 45) d'un certain nombre de stations de base radio correspondantes (20, 30 ; 20, 30, 40), et ladite étape (S2 ; S12 ; S22) de sélection d'au moins une autre cellule passive pour activation comprend l'étape comprenant de sélectionner une autre cellule passive pour activation parmi ladite pluralité d'autres cellules passives sur la base des informations reçues représentatives desdites mesures d'intensité de signal.

5. Procédé selon la revendication 1, dans lequel lesdites étapes de demande de mesures d'intensité de signal, de sélection d'au moins une autre cellule passive pour activation et de demande que ladite autre cellule passive sélectionnée soit activée sont déclenchées par un besoin de transférer un équipement utilisateur (100) actuellement desservi par la station de base radio de desserte (10) vers une nouvelle cellule cible, où la cellule sélectionnée peut être utilisée comme cellule cible après que la cellule sélectionnée a été activée.

6. Procédé selon la revendication 1, dans lequel ladite étape (S3 ; S13 ; S23) comprenant de demander à ladite autre cellule passive sélectionnée d'être activée comprend l'étape comprenant de signaler une commande d'activation de cellule entre des stations de base radio, ou l'étape consistant à signaler que des informations d'autorisation d'accès aléatoire depuis ladite station de base radio de desserte (10) vers l'équipement utilisateur (100) dans la cellule sélectionnée entraînent que ledit équipement utilisateur (100) transmette un accès aléatoire à la station de base radio correspondante gérant la cellule sélectionnée de manière à déclencher une activation de la cellule sélectionnée.

7. Procédé selon la revendication 1, dans lequel lesdites étapes de demande de mesures d'intensité de signal, de sélection d'au moins une autre cellule passive pour activation et de demande que ladite autre cellule passive sélectionnée soit activée sont exécutées par une unité de réseau (10 ; 55) associée avec ledit réseau de communication radio, où ladite unité de réseau est ladite station de base radio de desserte (10) ou un contrôleur de réseau radio (55) dudit réseau de communication radio.

8. Procédé selon la revendication 7, comprenant en outre l'étape comprenant que ladite unité de réseau (10 ; 55) reçoive, pour chaque cellule d'un certain nombre d'autres cellules, des informations représentatives du fait que la cellule est passive ou active à partir des stations de base radio correspondantes responsables des autres cellules.

9. Appareil (300) pour contrôler l'activation d'au moins une cellule dans un réseau de radiocommunication (1) comprenant un certain nombre de stations de base radio (10, 20 ; 10, 20, 30 ; 10, 20, 30, 40), au moins une desdites stations de base radio, dont il est fait référence en tant que station de base radio de desserte (10), gérant une cellule active (15) desservant un équipement utilisateur (100), ledit appareil comprenant :
un moyen (310) pour demander des mesures d'intensité de signal dans une zone d'au moins une autre cellule passive (25 ; 25, 35 ; 25, 35, 45) d'une station de base radio (20 ; 20, 30 ; 20, 30, 40) ne transmettant actuellement aucune information de définition de cellule pour ladite autre cellule passive ;
un moyen (320) pour sélectionner, sur la base des informations reçues représentatives desdites mesures d'intensité de signal, au moins une autre cellule passive pour activation ; et
un moyen (330) pour demander à ladite autre cellule passive sélectionnée d'être activée en entraînant que la station de base radio correspondante gérant la cellule sélectionnée commence la transmission d'informations de définition de cellule, ledit appareil étant **caractérisé en ce que** :
ledit moyen (310) pour demander des mesures d'intensité de signal comprend un moyen pour demander audit équipement utilisateur d'effectuer et de rapporter des mesures de liaison descendante d'informations de définition de cellule reçues provenant d'au moins une station de base radio d'un autre réseau d'accès radio chevauchant, et ledit moyen (320) pour sélectionner au moins une autre cellule passive pour activation est configuré pour sélectionner au moins une autre cellule passive pour activation sur la base de mesures de liaison descendante rapportées dudit réseau d'accès radio chevauchant, ou
ledit moyen (310) pour demander des mesures d'intensité de signal comprend un moyen pour demander à ce qu'au moins une station de base radio gérant une autre cellule passive respective effectue et rapporte des mesures de liaison montante de transmissions d'équipement utilisateur, et ledit moyen (320) pour sélectionner au moins une autre cellule passive pour activation est configuré pour sélectionner au moins une autre cellule passive pour activation sur la base de mesures de liaison montante rapportées de transmissions d'équipement utilisateur.

10. Appareil selon la revendication 9, dans lequel ladite cellule gérée par ladite station de base radio de desserte (10) et ladite au moins une autre cellule passive sont associées avec une première technologie d'accès radio, et ledit réseau d'accès radio chevauchant est associé avec une seconde technologie d'accès radio différente.

11. Appareil selon la revendication 9, dans lequel ledit moyen (320) pour sélectionner au moins une autre cellule passive pour activation est configuré pour sélectionner au moins une autre cellule passive pour activation en se basant également sur des mesures de liaison descendante rapportées par ledit équipement utilisateur (100) de transmissions dans au moins une autre cellule active.

12. Appareil selon la revendication 9, dans lequel ledit moyen (310) pour demander des mesures d'intensité de signal comprend un moyen pour demander des mesures d'intensité de signal dans une pluralité d'autres cellules passives (25, 35 ; 25, 35, 45) d'un certain nombre de stations de base radio correspondantes (20, 30 ; 20, 30, 40), et ledit moyen (320) pour sélectionner au moins une autre cellule passive pour activation comprend un moyen pour sélectionner une autre cellule passive pour activation parmi ladite pluralité d'autres cellules passives sur la base des informations reçues représentatives desdites mesures d'intensité de signal.

13. Appareil selon la revendication 9, dans lequel ledit moyen (310) pour demander des mesures d'intensité de signal, ledit moyen (320) pour sélectionner au moins une autre cellule passive pour activation et ledit moyen (330) pour demander que ladite autre cellule passive sélectionnée soit activée sont déclenchés par un besoin de transférer un équipement utilisateur (100) actuellement desservi par la station de base radio de desserte (10) vers une nouvelle cellule cible, où la cellule sélectionnée peut être utilisée comme cellule cible après que la cellule sélectionnée a été activée.

14. Appareil selon la revendication 9, dans lequel ledit moyen (330) pour demander que ladite autre cellule passive sélectionnée soit activée comprend un moyen pour signaler une commande d'activation de cellule entre des stations de base radio, ou un moyen pour signaler des informations d'autorisation d'accès aléatoire à un équipement utilisateur dans la cellule sélectionnée pour entraîner que ledit équipement utilisateur transmette un accès aléatoire à la station de base radio correspondante gérant la cellule sélectionnée de manière à déclencher une activation de la cellule sélectionnée.

15. Unité de réseau (10 ; 55) à utiliser dans un réseau de radiocommunication, ladite unité de réseau comprenant un appareil selon l'une quelconque des revendications 9 à 14.
